# EUROPEAN PATENT SPECIFICATION

(11) **EP 3 307 474 B1**
(45) Date of publication and mention of the grant of the patent: **06.01.2021**
(21) Application number: 16736621.0
(22) Date of filing: 09.06.2016
(51) Int. Cl.: B23K 26/402, B29C 33/38, B29C 33/42, B29C 37/00, B29C 45/37

(54) **PLASTIC SURFACES HAVING SURFACE STRUCTURES AND METHODS OF MAKING THE SAME**
KUNSTSTOFFOBERFLÄCHEN MIT OBERFLÄCHENSTRUKTUREN UND VERFAHREN ZUR HERSTELLUNG DAVON
SURFACES EN PLASTIQUE AYANT DES STRUCTURES DE SURFACE, ET PROCÉDÉS DE FABRICATION DE CES SURFACES

(30) Priority: 10.06.2015 US 201562173594 P
(43) Date of publication of application: 18.04.2018
(73) Proprietor: SABIC Global Technologies B.V., 4612 PX Bergen op Zoom (NL)
(72) Inventor: GU, Hao, 4612 PX Bergen op Zoom (NL); HEUSEVELDT, Jan Willem, 4612 PX Bergen op Zoom (NL); NOORDEGRAAF, Dirk, 4612 PX Bergen op Zoom (NL)
(74) Representative: Terpsma, Jelle Philip
(86) International application number: PCT/IB2016/053392
(87) International publication number: WO 2016/199054

(56) References cited:
- EP-A2- 1 068 945
- WO-A1-2013/003373
- CN-B- 102 799 063
- US-A- 4 923 608
- US-A1- 2003 224 144
- US-A1- 2013 140 744

## Description

### BACKGROUND

Typically, plastics having surface microstructure features, such as to cause diffusion of light traveling through the plastic or other properties of the surface of the plastic, are formed via injection molding utilizing silicone- or nickel-based mold inserts that are produced by photolithography-based techniques. However, the microstructures on the mold inserts are not durable enough for large scale production, providing a limited number of molding cycles, and also limiting the temperatures and pressures used during the molding.

U.S. 4,923,608 discloses a flat membrane formed from foils of organic polymers, glass or ceramic materials with pores tapering in funnel-shaped fashion. The pores can be produced by means of a laser. The flat membrane is distinguished by a high filtration performance.

Documents EP 1 068 945 A2 and US 2003/224144 A1 relate to methods of forming surface structures on a solid plastic part.

### SUMMARY OF THE INVENTION

In various embodiments, the present invention provides a method of forming surface structures on a plastic. according to claim 1. The method includes treating a surface of a solid plastic with laser interference patterning, to provide surface structures on the solid plastic, the surface structures having at least one dimension approximately parallel to the surface of about 100 nm to about 1 mm.

In various embodiments, the present disclosure provides a method of forming surface structures on a plastic. The method includes contacting a flowable resin composition to a surface of a metal form including surface structures on the contacted surface thereof, the surface structures having at least one dimension approximately parallel to the metal surface of about 100 nm to about 1 mm, to provide a solid plastic including corresponding surface structures on a surface thereof.

In various embodiments, the present invention provides a method of forming surface structures on a plastic according to claim 2. The method includes treating a surface of a metal with laser interference patterning, to provide surface structures on the treated metal surface, the surface structures having at least one dimension approximately parallel to the metal surface of about 100 nm to about 100 micrometers (µm), wherein the laser interference patterning directly forms the surface structures on the treated metal surface. The method also includes contacting a flowable resin composition to a surface of a metal form including surface structures on the contacted surface thereof, to provide a solid plastic including corresponding surface structures on a surface thereof.

In various embodiments, the present invention provides certain advantages over other plastic surfaces having surface structures, and methods of making the same, at least some of which are unexpected. In various embodiments, the method of forming surface structures on a plastic can be faster and less expensive than other techniques. In various embodiments, the metal form including surface microstructures for forming the microstructures in the surface of the plastic surface can be made directly on the metal using a laser interference technique, without using any photolithography techniques. In various embodiments, as compared to other laser techniques, the laser interference patterning can form smaller features and can provide higher energy at a specific location on a surface. In various embodiments, the surface structures on the metal form can be more durable than the surface structures on other metal forms for making surface structures on plastics, allowing for large scale production with a larger number of molding cycles and with less limitation on the temperatures and pressures used during molding. In various embodiments, the surface structures form a roughened surface that can function as a diffusive surface for lighting applications. In various embodiments, the surface structures can give the surface of the plastic various properties, such as hydrophilicity, hydrophobicity, oleophobicity, oleophilicity, antidust, antibacterial, antiviral, improved adhesion with various materials, or a combination thereof.

Reference will now be made in detail to certain embodiments of the disclosed subject matter, examples of which are illustrated in part in the accompanying drawings. While the disclosed subject matter will be described in conjunction with the enumerated claims, it will be understood that the exemplified subject matter is not intended to limit the claims to the disclosed subject matter.

### BRIEF DESCRIPTION OF THE FIGURES

The drawings illustrate generally, by way of example, but not by way of limitation, various embodiments discussed in the present document.
FIGS. 1A-1F illustrate light microscope images of a patterned surface on a plastic sample at various magnifications, in accordance with various embodiments. The scale was 1,000 µm, 1000 µm, 200 µm, 100 µm, 100 µm, and 100 µm, respectively.
FIGS. 2A-2F illustrate light microscope images of a patterned surface on a metal sample at various magnifications, in accordance with various embodiments. The scale was 1,000 µm, 1000 µm, 200 µm, 200 µm, 100 µm, and 100 µm, respectively.
FIG. 3A illustrates profilometer measurements of surface structures on a plastic sample, in accordance with various embodiments.
FIG. 3B illustrates profilometer measurements of surface structures on a metal sample, in accordance with various embodiments.

### DETAILED DESCRIPTION OF THE INVENTION

In various embodiments, the present invention provides a method of forming surface structures on a plastic. The method can include treating a surface of a solid plastic with laser interference patterning. The treating with laser interference patterning can provide surface structures on the solid plastic. The surface structures can have at least one dimension approximately parallel to the surface of about 100 nanometers (nm) to about 1 millimeters (mm).

In various embodiments, the present invention provides a method of forming surface structures on a plastic that includes contacting a flowable resin composition to a surface of a metal form including surface structures on the contacted surface thereof. The surface structures can have at least one dimension approximately parallel to the metal surface of about 100 nm to about 1 mm. The contacting provides a solid plastic including corresponding surface structures on a surface thereof.

The surface structures (e.g., surface structures formed directly on a solid plastic, surface structures on the metal form, or the surface structures on the solid plastic formed by contacting the flowable resin composition with the metal form) can have any suitable shape, such as dots, lines, pores, or a combination comprising at least one of the foregoing shapes. The surface structures can include convex surface structures, concave surface structures, or a combination thereof. The surface structures can be micro surface structures or sub-micro surface structures. The surface structures can have at least one dimension approximately parallel to the surface having the surface structures thereon of about 100 nm to about 1 mm, about 100 nm to about 100 micrometers (µm), or about 100 nm or less, or about 125 nm, 150, 175, 200, 225, 250, 300, 400, 500, 600, 700, 800, 900 nm, 1 micrometer, 2, 3, 4, 5, 6, 8, 10, 12, 14, 16, 18, 20, 25, 30, 35, 40, 45, 50, 55, 60, 65, 70, 75, 80, 85, 90, 95, 100, 125, 150, 175, 200, 225, 250, 300, 400, 500, 600, 700, 800, 900 micrometers, or about 1 mm. The at least one dimension can be any suitable linear dimension approximately parallel to the surface, such as length, width, diameter, and the like. The surface structures can have a height or depth of about 1 nm to about 1 mm, about 10 nm to about 100 micrometers, or about 1 nm, 2, 3, 4, 5, 6, 8, 10, 12, 14, 16, 18, 20, 25, 30, 35, 40, 45, 50, 55, 60, 65, 70, 75, 80, 85, 90, 95, 100, 125, 150, 175, 200, 225, 250, 300, 400, 500, 600, 700, 800, 900 nm, 1 micrometer, 2, 3, 4, 5, 6, 8, 10, 12, 14, 16, 18, 20, 25, 30, 35, 40, 45, 50, 55, 60, 65, 70, 75, 80, 85, 90, 95, 100, 125, 150, 175, 200, 225, 250, 300, 400, 500, 600, 700, 800, 900 micrometers, or about 1 mm. The surface structures can have any suitable density, such as about as about 1 structure to about 1,000,000,000,000 structures per square mm, or about 10 structures to about 1,000,000,000 structures per square mm, or about 100 structure to about 1,000,000 structure per square mm, or about 1 structure, 2, 3, 4, 5, 10, 20, 50, 100, 150, 200, 250, 500, 750, 1,000, 2,000, 5,000, 10,000, 20,000, 50,000, 100,000, 500,000, 1,000,000, 2,000,000, 5,000,000, 10,000,000, 100,000,000, 1,000,000,000, or about 500,000,000,000 or more structures per square mm. The surface structures can provide a roughening of the surface, and can diffuse light that passes through the solid plastic. The surface structures can provide the solid plastic surface with hydrophilicity, hydrophobicity, oleophobicity, oleophilicity, antidust, antibacterial, antiviral, improved adhesion with various materials, or a combination comprising at least one of the foregoing properties.

The method can include treating the surface of the metal form with laser interference patterning to provide the surface structures on the treated metal surface, which can then be used to form a solid plastic having surface structures thereon. The method can include directly treating the surface of a solid plastic with laser interference patterning to form surface structures thereon. Laser interference patterning includes forming an interference pattern between two or more coherent laser beams (e.g., two beams, three beams, four beams, or more) and allowing the interference pattern to be exposed to the surface being treated.

The treatment of the surface of the metal form with the laser interference patterning can directly form the surface structures on the metal surface. The treatment of the solid plastic surface with the laser interference patterning can directly form the surface structures on the plastic surface. The treatment of the metal surface or plastic surface with laser interference patterning to form the surface structures can be free of photolithography and photochemical machining. The metal surface or plastic surface treated with laser interference patterning to form the surface structures can be free of a photomask and a photoresist. The method can be free of chemical etching of the treated metal surface or the treated plastic surface. The surface structures on the metal form generated using laser interference patterning can have superior mechanical properties and thermal stability, as compared to other surface structures on metal forms.

One or more lasers can be used to perform the laser interference patterning, having any suitable intensity, duration, and beam size. The one or more lasers can include any suitable laser, such as a gas laser, a chemical laser, a dye laser, a metal-vapor laser, a solid-state laser, a semiconductor laser, a free electron laser, a gas dynamic laser, a Raman laser, a nuclear pumped laser, or a combination thereof. The gas laser can be at least one of a helium-neon laser, argon laser, krypton laser, xenon ion laser, nitrogen laser, carbon dioxide laser, carbon monoxide laser, and an excimer laser. The chemical laser can be at least one of a hydrogen fluoride laser, deuterium fluoride laser, chemical oxygen-iodine laser (COIL), and an all gas-phase iodine laser (AGIL). The metal-vapor laser can be a laser using metal vapors such as at least one of helium-cadmium metal vapor, helium-mercury, helium-selenium, helium-silver, strontium vapor, neon-copper, copper, and gold metal vapor. The solid-state laser can be at least one of a ruby laser, a neodymium-doped yttrium aluminum garnet (Nd:Y₃Al₅O₁₂, or Nd:YAG) laser, a neodymium- and -chromium-doped yttrium aluminum garnet (NdCr:Y₃Al₅O₁₂) laser, an erbium-doped yttrium aluminum garnet (Er:Y₃Al₅O₁₂) laser, a neodymium-doped yttrium lithium fluoride (Nd:LiYF₄) laser, a neodymium-doped yttrium orthovanadate (Nd:YVO₄) laser, a neodymium-doped yttrium calcium oxoborate (Nd:YCa₄O(BO₃)₃) laser, a neodymium glass (Nd:glass) laser, a titanium sapphire (Ti:sapphire) laser, a thulium yttrium aluminum garnet (Tm:Y₃Al₅O₁₂) laser, a ytterbium yttrium aluminum garnet (Yb:Y₃Al₅O₁₂) laser, a ytterbium-doped glass laser, a holmium-doped yttrium aluminum garnet (Ho:Y₃Al₅O₁₂) laser, a chromium-doped zinc selenide (Cr:ZnSe) laser, a cerium-doped lithium strontium (or calcium) aluminum fluoride (Ce:LiSAF, Ce:LiCAF) laser, a chromium doped chrysoberyl (alexandrite) laser, and an erbium-doped or erbium-ytterbium-codoped glass laser. The semiconductor laser can be at least one of a semiconductor laser diode, GaN laser, InGaN laser, AlGaInP or AlGaAs laser, InGaAsP laser, lead salt laser, quantum cascade laser, and a hybrid silicon laser. The laser can be a Nd:YAG laser (e.g., with a approximately 1064 nm wavelength), a UV laser (e.g., a Nd:YAG or Nd:YVO₄ laser with an approximately 263 nm wavelength), or a combination thereof. The pulse duration can be about 1 nanosecond (ns) to about 100 ns, about 2 ns to about 20 ns, about 5 ns to about 15 ns, or about 1 ns or less, or about 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 95, or about 100 ns or more.

The metal form can include any suitable metal. The metal form can include one elemental metal or a combination of more than one elemental metal. In some embodiments, the metal form includes aluminum, steel (e.g., stainless steel), iron, copper, magnesium, titanium, or any combination thereof (e.g., an alloy or a heterogeneous mixture). The metal form can include any other suitable materials, in addition to the one or more metals. The one or more elemental metals can form any suitable proportion of the metal form, such as about 50 wt% to about 100 wt%, or about 50 wt% or less, or about 55 wt%, 60, 65, 70, 75, 80, 85, 90, 95, 96, 97, 98, 99, 99.9, or about 100 wt%. The metal form can be an insert for an injection molding mold. The metal form can be at least part of the interior of an injection molding mold.

Contacting the flowable resin composition to the surface of the metal form having surface structures thereon can be any suitable contacting. Contacting the metal form and the flowable resin composition can include injection molding the flowable resin composition, such that the flowable resin composition is heated and under pressure when contacted with the metal form. The injection molding process can be any suitable injecting molding process. In another example, the contacting can occurring during extrusion of the flowable resin composition, and the metal form can be an extrusion roll or other part that contacts the flowable resin composition during an extrusion process. Following the contacting, the method can include curing the flowable resin composition to form a solid plastic having surface structures thereof corresponding to the surface structures on the metal form, such as by cooling the flowable resin composition to allow it to solidify (e.g., in the case of a thermoplastic flowable resin composition) or such as by heating the flowable resin composition to thermally cure it (e.g., in the case of a thermosetting flowable resin composition), or a combination comprising at least one of the foregoing methods.

In various embodiments, during injection molding, the metal form having surface structures can be heated sufficiently such that the flowable resin composition effectively penetrates to the bottom of the surface features in the metal form and fully transfers the surface structures from the metal surface to the solid plastic formed. The heating can occur in any suitable way, such as heating of the mold such that heat is transferred to the metal form, heating of the metal form outside of the mold prior to insertion into the mold, or heating of the metal form within the mold such as via a heating insert or a heater embedded in the mold. After injection the mold and metal form can be allowed to cool passively or active cooling can be used to shorten cycle time.

In various embodiments, the flowable resin composition can be heated sufficiently such that during injection molding the flowable resin composition is less viscous and thereby more fully penetrates to the bottom of the surface features in the metal form. The flowable resin composition can be heated to any sufficient temperature such that sufficiently low viscosity occurs but such that an undesired degree of degradation of the flowable resin composition does not occur, such as about 0 °C to about 300 °C over the glass transition temperature of the flowable resin composition (T_{g}), or about 10 °C to about 250 °C, or about 50 °C to about 200 °C, or about 0 °C over T_{g}, or about 5 °C, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 210, 220, 230, 240, 250, 260, 270, 280, 290, or about 300 °C or more over the T_{g.} In other words, the flowable resin can be heated to a temperature X which is: T_{g} + 0°C ≤ X ≤ T_{g} + 300°C.

The solid plastic that is treated with the laser interference patterning, or the flowable resin composition that is contacted to the metal form, can include any one or more suitable polymers. The solid plastic or the flowable resin composition can include at least one of an acrylonitrile butadiene styrene (ABS) polymer, an acrylic polymer, a celluloid polymer, a cellulose acetate polymer, a cycloolefin copolymer (COC), an ethylene-vinyl acetate (EVA) polymer, an ethylene vinyl alcohol (EVOH) polymer, a fluoroplastic, an ionomer, an acrylic/PVC alloy, a liquid crystal polymer (LCP), a polyacetal polymer (POM or acetal), a polyacrylate polymer, a polymethylmethacrylate polymer (PMMA), a polyacrylonitrile polymer (PAN or acrylonitrile), a polyamide polymer (PA or nylon), a polyamide-imide polymer (PAI), a polyaryletherketone polymer (PAEK), a polybutadiene polymer (PBD), a polybutylene polymer (PB), a polybutylene terephthalate polymer (PBT), a polycaprolactone polymer (PCL), a polychlorotrifluoroethylene polymer (PCTFE), a polytetrafluoroethylene polymer (PTFE), a polyethylene terephthalate polymer (PET), a polycyclohexylene dimethylene terephthalate polymer (PCT), a polycarbonate polymer (PC), a polyhydroxyalkanoate polymer (PHA), a polyketone polymer (PK), a polyester polymer, a polyethylene polymer (PE), a polyetheretherketone polymer (PEEK), a polyetherketoneketone polymer (PEKK), a polyetherketone polymer (PEK), a polyetherimide polymer (PEI), a polyethersulfone polymer (PES), a polyethylenechlorinate polymer (PEC), a polyimide polymer (PI), a polylactic acid polymer (PLA), a polymethylpentene polymer (PMP), a polyphenylene oxide polymer (PPO), a polyphenylene sulfide polymer (PPS), a polyphthalamide polymer (PPA), a polypropylene polymer, a polystyrene polymer (PS), a polysulfone polymer (PSU), a polytrimethylene terephthalate polymer (PTT), a polyurethane polymer (PU), a polyvinyl acetate polymer (PVA), a polyvinyl chloride polymer (PVC), a polyvinylidene chloride polymer (PVDC), a polyamideimide polymer (PAI), a polyarylate polymer, a polyoxymethylene polymer (POM), and a styrene-acrylonitrile polymer (SAN). The solid plastic or the flowable resin composition can include at least one of a polycarbonate polymer (PC), an acrylonitrile butadiene styrene polymer (ABS), polybutylene terephthalate polymer (PBT), a polymethylmethacrylate polymer (PMMA), and a styrene acrylonitrile polymer (SAN). The solid plastic can include one or more coatings thereon, such that in a method of forming surface structures directly on the plastic surface using laser interference patterning that surface structures are at least in part in the one or more coatings. The one or more coatings can be any suitable coatings, such as including any polymer described herein, an alkyd resin (e.g., polyester), a urea/aldehyde resin (e.g., urea/formaldehyde), a melamine/aldehyde resin (e.g., melamine/formaldehyde), a phenolic resin, a novolac resin, a resol resin, an epoxy resin, a polyimide resin (e.g., including a polyimide, curable to form a polyimide, or both), a polyurethane resin (e.g., including a polyurethane, curable to form a polyurethane, or both), a silicone resin (e.g., including a silicone, curable to form a silicone, or both), a furan-based resin, a polyamide resin (e.g., including a polyamide, curable to forma a polyamide, or both), a polycarbonate resin (e.g., including a polycarbonate, curable to form a polycarbonate, or both), a polycarbamate resin (e.g., including a polycarbamate, curable to form a polycarbamate, or both), or any combination thereof.

The solid plastic including surface structures (e.g., the solid plastic treated with laser interference patterning, or the solid plastic formed from the flowable resin composition contacting the metal form) can diffuse light that passes therethough. The solid plastic can be effective for forming a lighting product having light that passes through the solid plastic, such the for an exterior shell of a light bulb. In some embodiments, the method includes forming a lighting product including the solid plastic including surface structures. In various embodiments, the present disclosure provides a lighting product including the solid plastic including surface structures. In various embodiments, the surface structures can provide properties to the solid plastic such as hydrophilicity, hydrophobicity, oleophobicity, oleophilicity, antidust, antibacterial, antiviral, improved adhesion with various materials, or a combination comprising at least one of the foregoing properties.

### Examples

Various embodiments of the present invention can be better understood by reference to the following Examples which are offered by way of illustration. The present invention is not limited to the Examples given herein.

### Example 1. Patterning of metal and plastic surfaces.

Sample 1 was a plastic sample (polycarbonate) having dimensions of 175mmX175mmX2mm (i.e., 175mm by 175mm by 2mm). Sample 2 was a metal sample (stainless steel) having dimensions of 175mmX175mmX2mm.

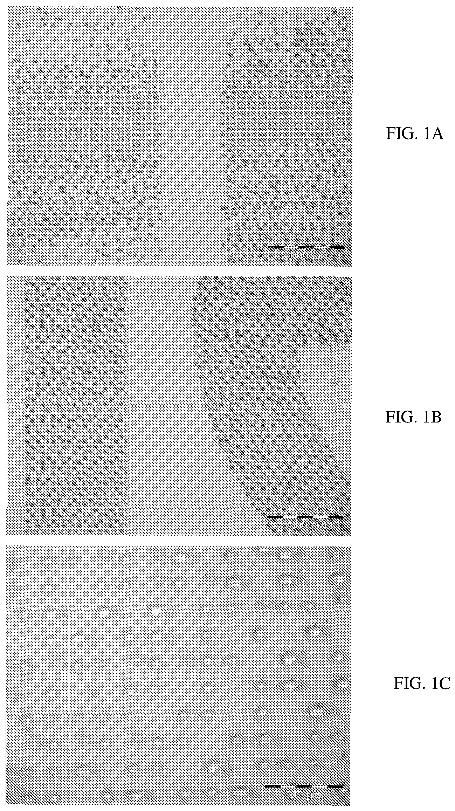

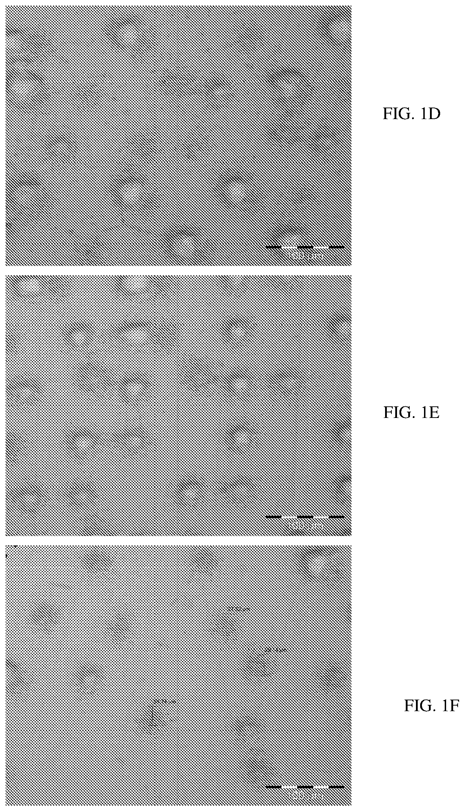

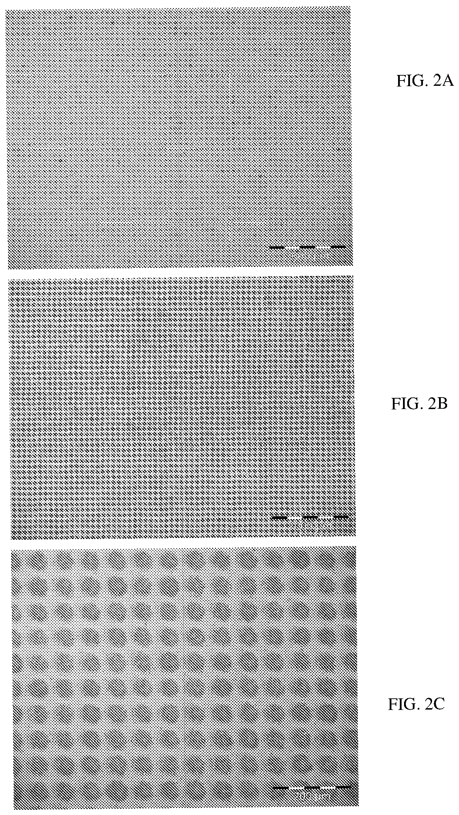

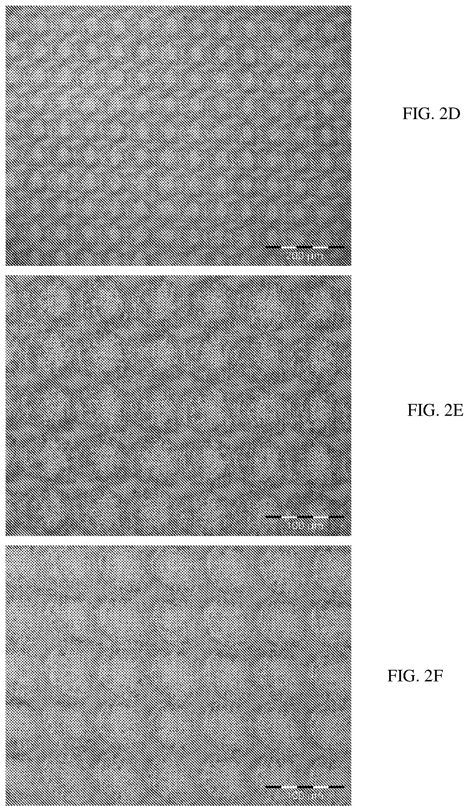

A neodymium-doped yttrium aluminum garnet (Nd:YAG) laser with a 1064 nm wavelength and 10 ns pulse duration to form patterns on each of Sample 1 and Sample 2. Light microscope images of Sample 1 are illustrated in FIGS. 1A-F. Light microscope images of Sample 2 are illustrated in FIGS. 2A-F. The images illustrate different densities of dotted structures on the surface. Zoomed-in images illustrate line patterns. For the plastic sample, ten line patterns had an average length of 26.2 micrometers, corresponding to a peak-to-peak distance of the lines of about 2.6 micrometers. For the metal sample, ten line patterns had an average length of 23.6 micrometers, corresponding to a peak-to-peak distance of the lines of about 2.4 micrometers.

Shading differences of the patterns are due to different densities of the pattern area.

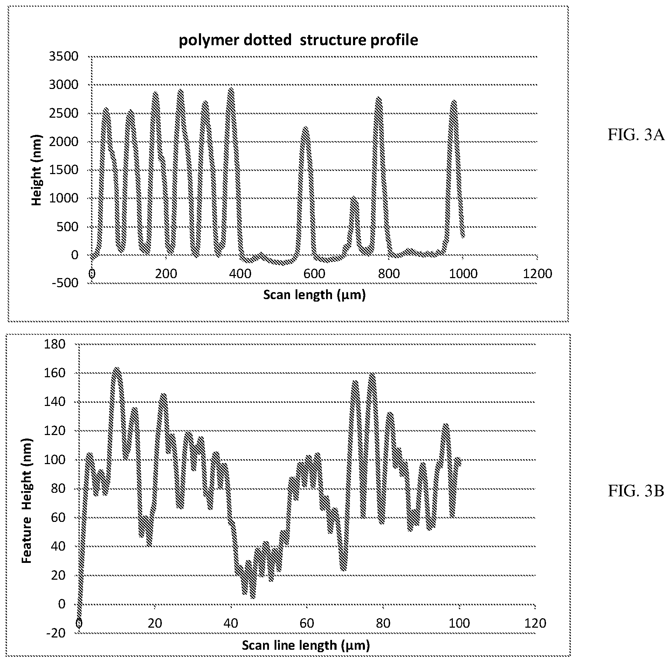

A profiliometer was used to measure the height of the surface structures in a selected area for each of Sample 1 and Sample 2, with results illustrated in FIGS. 3A-B, respectively. The dotted patterns on the plastic sample had features that were about 67 micrometers wide and about 2.5 micrometers in height, while the line patterns on the metal surface had a height of about 50 nm.

### Example 2. Transfer of surface structures of metal inserts to plastic surface via injection molding

Sample 2 from Example 1 was placed inside a mold. Using standard molding conditions, various types of plastics were injection molded into the mold: 1) polycarbonate (PC), with an injection temperature of 300 °C, 2) acrylonitrile butadiene styrene (ABS), with an injection temperature of 250 °C, 3) a PC and polybutylene terephthalate (PBT) blend, with an injection temperature of 270 °C. The mold had a temperature of 80 °C at the time of injection.

The microstructures were transcribed from metal insert to all tested plastics successfully.

Set forth below are some embodiments of the method and article discussed herein. The following exemplary embodiments are provided, the numbering of which is not to be construed as designating levels of importance:
Embodiment 1: A method of forming surface structures on a plastic, the method comprising: treating a surface of a solid plastic with laser interference patterning, to provide surface structures on the solid plastic, the surface structures having at least one dimension approximately parallel to the surface of about 100 nm to about 1 mm.
Embodiment 2: A method of forming surface structures on a plastic, the method comprising: contacting a flowable resin composition to a surface of a metal form comprising surface structures on the contacted surface thereof, the surface structures having at least one dimension approximately parallel to the metal surface of about 100 nm to about 1 mm, to provide a solid plastic comprising corresponding surface structures on a surface thereof.
Embodiment 3: The method of Embodiment 2, further comprising treating the surface of the metal with laser interference patterning, to provide the surface structures on the treated metal surface.
Embodiment 4: The method of Embodiment 3, wherein the laser interference patterning directly forms the surface structures on the treated metal surface.
Embodiment 5: The method of any of Embodiments 3 - 4, wherein the surface of the metal treated with laser interference patterning is free of a photomask and a photoresist.
Embodiment 6: The method of any of Embodiments 2 - 5, wherein the method is free of chemical etching of the treated metal surface.
Embodiment 7: The method of any of Embodiments 2 - 6, wherein contacting the flowable resin composition and the surface of the metal comprises injecting molding the flowable resin composition.
Embodiment 8: The method of any of Embodiments 2 - 7, wherein the metal form comprising the surface structures is an insert in an injection molding mold, is part of the interior of an injection molding mold, or a combination thereof.
Embodiment 9: The method of any of the preceding Embodiments, wherein the surface structures have a height or depth of about 1 nm to about 10 micrometers.
Embodiment 10: The method of any of the preceding Embodiments, wherein the surface structures have a height or depth of about 100 nm to about 1 mm.
Embodiment 11: The method of any of the preceding Embodiments, wherein the surface structures have at least one dimension approximately parallel to the metal surface of about 100 nm to about 100 micrometers.
Embodiment 12: The method of any of the preceding Embodiments, wherein the surface structures are at least one of dots, lines, and pores.
Embodiment 13: The method of any of the preceding Embodiments, wherein the laser used to perform the laser interference patterning comprises a gas laser, a chemical laser, a dye laser, a metal-vapor laser, a solid-state laser, a semiconductor laser, a free electron laser, a gas dynamic laser, a Raman laser, a nuclear pumped laser, or a combination thereof.
Embodiment 14: The method of any of the preceding Embodiments, wherein the laser used to perform the laser interference patterning comprises a Nd:YAG laser, a UV laser, or a combination thereof.
Embodiment 15: The method of any of the preceding Embodiments, wherein the method is free of photolithography and photochemical machining.
Embodiment 16: The method of any of the preceding Embodiments, wherein the plastic comprises at least one of an acrylonitrile butadiene styrene (ABS) polymer, an acrylic polymer, a celluloid polymer, a cellulose acetate polymer, a cycloolefin copolymer (COC), an ethylene-vinyl acetate (EVA) polymer, an ethylene vinyl alcohol (EVOH) polymer, a fluoroplastic, an ionomer, an acrylic/PVC alloy, a liquid crystal polymer (LCP), a polyacetal polymer (POM or acetal), a polyacrylate polymer, a polymethylmethacrylate polymer (PMMA), a polyacrylonitrile polymer (PAN or acrylonitrile), a polyamide polymer (PA or nylon), a polyamide-imide polymer (PAI), a polyaryletherketone polymer (PAEK), a polybutadiene polymer (PBD), a polybutylene polymer (PB), a polybutylene terephthalate polymer (PBT), a polycaprolactone polymer (PCL), a polychlorotrifluoroethylene polymer (PCTFE), a polytetrafluoroethylene polymer (PTFE), a polyethylene terephthalate polymer (PET), a polycyclohexylene dimethylene terephthalate polymer (PCT), a polycarbonate polymer (PC), a polyhydroxyalkanoate polymer (PHA), a polyketone polymer (PK), a polyester polymer, a polyethylene polymer (PE), a polyetheretherketone polymer (PEEK), a polyetherketoneketone polymer (PEKK), a polyetherketone polymer (PEK), a polyetherimide polymer (PEI), a polyethersulfone polymer (PES), a polyethylenechlorinate polymer (PEC), a polyimide polymer (PI), a polylactic acid polymer (PLA), a polymethylpentene polymer (PMP), a polyphenylene oxide polymer (PPO), a polyphenylene sulfide polymer (PPS), a polyphthalamide polymer (PPA), a polypropylene polymer, a polystyrene polymer (PS), a polysulfone polymer (PSU), a polytrimethylene terephthalate polymer (PTT), a polyurethane polymer (PU), a polyvinyl acetate polymer (PVA), a polyvinyl chloride polymer (PVC), a polyvinylidene chloride polymer (PVDC), a polyamideimide polymer (PAI), a polyarylate polymer, a polyoxymethylene polymer (POM), and a styrene-acrylonitrile polymer (SAN).
Embodiment 17: The method of any of the preceding Embodiments, wherein the plastic comprises at least one of a polycarbonate polymer (PC), an acrylonitrile butadiene styrene polymer (ABS), polybutylene terephthalate polymer (PBT), a polymethylmethacrylate polymer (PMMA), and a styrene acrylonitrile polymer (SAN).
Embodiment 18: The method of any of the preceding Embodiments, wherein the solid plastic comprising surface structures diffuses light that passes therethough.
Embodiment 19: The method of any of the preceding Embodiments, further comprising forming a lighting product comprising the solid plastic comprising surface structures.
Embodiment 20: A lighting product comprising the solid plastic with the surface structures of any of the preceding Embodiments.
Embodiment 21: A method of forming surface structures on a plastic, the method comprising: treating a surface of a metal with laser interference patterning, to provide surface structures on the treated metal surface, the surface structures having at least one dimension approximately parallel to the metal surface of about 1 nm to about 100 micrometers, wherein the laser interference patterning directly forms the surface structures on the treated metal surface; and contacting a flowable resin composition to a surface of a metal form comprising surface structures on the contacted surface thereof, to provide a solid plastic comprising corresponding surface structures on a surface thereof.
Embodiment 22: The method of any one or any combination of Embodiments 1-21 optionally configured such that all elements or options recited are available to use or select from.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1,1% to 2.2%, 3.3% to 4.4%) within the indicated range. The statement "about X to Y" has the same meaning as "about X to about Y," unless indicated otherwise, Likewise, the statement "about X, Y, or about Z" has the same meaning as "about X, about Y, or about Z," unless indicated otherwise.

In this document; the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section. A comma can be used as a delimiter or digit group separator to the left or right of a decimal mark; for example, "0.000,1" is equivalent to "0.0001."

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%.

This application claims priority to US Provisional Application No. 62/173,594 filed June 10, 2015.

The term "organic group" as used herein refers to any carbon-containing functional group. For example, an oxygen-containing group such as an alkoxy group, aryloxy group, aralkyloxy group, oxo(carbonyl) group, a carboxyl group including a carboxylic acid, carboxylate, and a carboxylate ester; a sulfur-containing group such as an alkyl and aryl sulfide group; and other heteroatom-containing groups. Non-limiting examples of organic groups include OR, OOR, OC(O)N(R)₂, CN, CF₃, OCF₃, R, C(O), methylenedioxy, ethylenedioxy, N(R)₂, SR, SOR, SO₂R, SO₂N(R)₂, SO₃R, C(O)R, C(O)C(O)R, C(O)CH₂C(O)R, C(S)R, C(O)OR, OC(O)R, C(O)N(R)₂, OC(O)N(R)₂, C(S)N(R)₂, (CH₂)₀₋₂N(R)C(O)R, (CH₂)₀₋₂N(R)N(R)₂, N(R)N(R)C(O)R, N(R)N(R)C(O)OR, N(R)N(R)CON(R)₂, N(R)SO₂R, N(R)SO₂N(R)₂, N(R)C(O)OR, N(R)C(O)R, N(R)C(S)R, N(R)C(O)N(R)₂, N(R)C(S)N(R)₂, N(COR)COR, N(OR)R, C(=NH)N(R)₂, C(O)N(OR)R, C(=NOR)R, and substituted or unsubstituted (C₁-C₁₀₀)hydrocarbyl, wherein R can be hydrogen (in examples that include other carbon atoms) or a carbon-based moiety, and wherein the carbon-based moiety can be substituted or unsubstituted.

The term "substituted" as used herein in conjunction with a molecule or an organic group as defined herein refers to the state in which one or more hydrogen atoms contained therein are replaced by one or more non-hydrogen atoms. The term "functional group" or "substituent" as used herein refers to a group that can be or is substituted onto a molecule or onto an organic group. Examples of substituents or functional groups include, but are not limited to, a halogen (e.g., F, Cl, Br, and I); an oxygen atom in groups such as hydroxy groups, alkoxy groups, aryloxy groups, aralkyloxy groups, oxo(carbonyl) groups, carboxyl groups including carboxylic acids, carboxylates, and carboxylate esters; a sulfur atom in groups such as thiol groups, alkyl and aryl sulfide groups, sulfoxide groups, sulfone groups, sulfonyl groups, and sulfonamide groups; a nitrogen atom in groups such as amines, hydroxyamines, nitriles, nitro groups, N-oxides, hydrazides, azides, and enamines; and other heteroatoms in various other groups. Non-limiting examples of substituents that can be bonded to a substituted carbon (or other) atom include F, Cl, Br, I, OR, OC(O)N(R)₂, CN, NO, NO₂, ONO₂, azido, CF₃, OCF₃, R, O (oxo), S (thiono), C(O), S(O), methylenedioxy, ethylenedioxy, N(R)₂, SR, SOR, SO₂R, SO₂N(R)₂, SO₃R, C(O)R, C(O)C(O)R, C(O)CH₂C(O)R, C(S)R, C(O)OR, OC(O)R, C(O)N(R)₂, OC(O)N(R)₂, C(S)N(R)₂, (CH₂)₀₋₂N(R)C(O)R, (CH₂)₀₋₂N(R)N(R)₂, N(R)N(R)C(O)R, N(R)N(R)C(O)OR, N(R)N(R)CON(R)₂, N(R)SO₂R, N(R)SO₂N(R)₂, N(R)C(O)OR, N(R)C(O)R, N(R)C(S)R, N(R)C(O)N(R)₂, N(R)C(S)N(R)₂, N(COR)COR, N(OR)R, C(=NH)N(R)₂, C(O)N(OR)R, and C(=NOR)R, wherein R can be hydrogen or a carbon-based moiety; for example, R can be hydrogen, (C₁-C₁₀₀)hydrocarbyl, alkyl, acyl, cycloalkyl, aryl, aralkyl, heterocyclyl, heteroaryl, or heteroarylalkyl; or wherein two R groups bonded to a nitrogen atom or to adjacent nitrogen atoms can together with the nitrogen atom or atoms form a heterocyclyl.

The term "alkyl" as used herein refers to straight chain and branched alkyl groups and cycloalkyl groups having from 1 to 40 carbon atoms, 1 to about 20 carbon atoms, 1 to 12 carbons or, in some embodiments, from 1 to 8 carbon atoms. Examples of straight chain alkyl groups include those with from 1 to 8 carbon atoms such as methyl, ethyl, n-propyl, n-butyl, n-pentyl, n-hexyl, n-heptyl, and n-octyl groups. Examples of branched alkyl groups include, but are not limited to, isopropyl, iso-butyl, sec-butyl, t-butyl, neopentyl, isopentyl, and 2,2-dimethylpropyl groups. As used herein, the term "alkyl" encompasses n-alkyl, isoalkyl, and anteisoalkyl groups as well as other branched chain forms of alkyl. Representative substituted alkyl groups can be substituted one or more times with any of the groups listed herein, for example, amino, hydroxy, cyano, carboxy, nitro, thio, alkoxy, and halogen groups.

The term "alkenyl" as used herein refers to straight and branched chain and cyclic alkyl groups as defined herein, except that at least one double bond exists between two carbon atoms. Thus, alkenyl groups have from 2 to 40 carbon atoms, or 2 to about 20 carbon atoms, or 2 to 12 carbon atoms or, in some embodiments, from 2 to 8 carbon atoms. Examples include, but are not limited to vinyl, -CH=CH(CH₃), -CH=C(CH₃)₂, -C(CH₃)=CH₂, -C(CH₃)=CH(CH₃), -C(CH₂CH₃)=CH₂, cyclohexenyl, cyclopentenyl, cyclohexadienyl, butadienyl, pentadienyl, and hexadienyl among others.

The term "acyl" as used herein refers to a group containing a carbonyl moiety wherein the group is bonded via the carbonyl carbon atom. The carbonyl carbon atom is bonded to a hydrogen forming a "formyl" group or is bonded to another carbon atom, which can be part of an alkyl, aryl, aralkyl cycloalkyl, cycloalkylalkyl, heterocyclyl, heterocyclylalkyl, heteroaryl, heteroarylalkyl group or the like. An acyl group can include 0 to about 12, 0 to about 20, or 0 to about 40 additional carbon atoms bonded to the carbonyl group. An acyl group can include double or triple bonds within the meaning herein. An acryloyl group is an example of an acyl group. An acyl group can also include heteroatoms within the meaning herein. A nicotinoyl group (pyridyl-3-carbonyl) is an example of an acyl group within the meaning herein. Other examples include acetyl, benzoyl, phenylacetyl, pyridylacetyl, cinnamoyl, and acryloyl groups and the like. When the group containing the carbon atom that is bonded to the carbonyl carbon atom contains a halogen, the group is termed a "haloacyl" group. An example is a trifluoroacetyl group.

The term "cycloalkyl" as used herein refers to cyclic alkyl groups such as, but not limited to, cyclopropyl, cyclobutyl, cyclopentyl, cyclohexyl, cycloheptyl, and cyclooctyl groups. In some embodiments, the cycloalkyl group can have 3 to about 8-12 ring members, whereas in other embodiments the number of ring carbon atoms range from 3 to 4, 5, 6, or 7. Cycloalkyl groups further include polycyclic cycloalkyl groups such as, but not limited to, norbornyl, adamantyl, bornyl, camphenyl, isocamphenyl, and carenyl groups, and fused rings such as, but not limited to, decalinyl, and the like. Cycloalkyl groups also include rings that are substituted with straight or branched chain alkyl groups as defined herein. Representative substituted cycloalkyl groups can be mono-substituted or substituted more than once, such as, but not limited to, 2,2-, 2,3-, 2,4- 2,5- or 2,6-disubstituted cyclohexyl groups or mono-, di- or tri-substituted norbornyl or cycloheptyl groups, which can be substituted with, for example, amino, hydroxy, cyano, carboxy, nitro, thio, alkoxy, and halogen groups. The term "cycloalkenyl" alone or in combination denotes a cyclic alkenyl group.

The term "aryl" as used herein refers to cyclic aromatic hydrocarbon groups that do not contain heteroatoms in the ring. Thus aryl groups include, but are not limited to, phenyl, azulenyl, heptalenyl, biphenyl, indacenyl, fluorenyl, phenanthrenyl, triphenylenyl, pyrenyl, naphthacenyl, chrysenyl, biphenylenyl, anthracenyl, and naphthyl groups. In some embodiments, aryl groups contain about 6 to about 14 carbons in the ring portions of the groups. Aryl groups can be unsubstituted or substituted, as defined herein. Representative substituted aryl groups can be mono-substituted or substituted more than once, such as, but not limited to, a phenyl group substituted at any one or more of 2-, 3-, 4-, 5-, or 6-positions of the phenyl ring, or a naphthyl group substituted at any one or more of 2- to 8-positions thereof.

The term "heterocyclyl" as used herein refers to aromatic and non-aromatic ring compounds containing three or more ring members, of which one or more is a heteroatom such as, but not limited to, N, O, and S.

The term "alkoxy" as used herein refers to an oxygen atom connected to an alkyl group, including a cycloalkyl group, as are defined herein. Examples of linear alkoxy groups include but are not limited to methoxy, ethoxy, propoxy, butoxy, pentyloxy, hexyloxy, and the like. Examples of branched alkoxy include but are not limited to isopropoxy, sec-butoxy, tert-butoxy, isopentyloxy, isohexyloxy, and the like. Examples of cyclic alkoxy include but are not limited to cyclopropyloxy, cyclobutyloxy, cyclopentyloxy, cyclohexyloxy, and the like. An alkoxy group can include about 1 to about 12, about 1 to about 20, or about 1 to about 40 carbon atoms bonded to the oxygen atom, and can further include double or triple bonds, and can also include heteroatoms. For example, an allyloxy group or a methoxyethoxy group is also an alkoxy group within the meaning herein, as is a methylenedioxy group in a context where two adjacent atoms of a structure are substituted therewith.

The term "amine" as used herein refers to primary, secondary, and tertiary amines having, e.g., the formula N(group)₃ wherein each group can independently be H or non-H, such as alkyl, aryl, and the like. Amines include but are not limited to R-NH₂, for example, alkylamines, arylamines, alkylarylamines; R₂NH wherein each R is independently selected, such as dialkylamines, diarylamines, aralkylamines, heterocyclylamines and the like; and R₃N wherein each R is independently selected, such as trialkylamines, dialkylarylamines, alkyldiarylamines, triarylamines, and the like. The term "amine" also includes ammonium ions as used herein.

The term "amino group" as used herein refers to a substituent of the form -NH₂, - NHR, -NR₂, -NR₃⁺, wherein each R is independently selected, and protonated forms of each, except for -NR₃⁺, which cannot be protonated. Accordingly, any compound substituted with an amino group can be viewed as an amine. An "amino group" within the meaning herein can be a primary, secondary, tertiary, or quaternary amino group. An "alkylamino" group includes a monoalkylamino, dialkylamino, and trialkylamino group.

The terms "halo," "halogen," or "halide" group, as used herein, by themselves or as part of another substituent, mean, unless otherwise stated, a fluorine, chlorine, bromine, or iodine atom.

The term "haloalkyl" group, as used herein, includes mono-halo alkyl groups, poly-halo alkyl groups wherein all halo atoms can be the same or different, and per-halo alkyl groups, wherein all hydrogen atoms are replaced by halogen atoms, such as fluoro. Examples of haloalkyl include trifluoromethyl, 1,1-dichloroethyl, 1,2-dichloroethyl, 1,3-dibromo-3,3-difluoropropyl, perfluorobutyl, and the like.

The term "hydrocarbon" or "hydrocarbyl" as used herein refers to a molecule or functional group, respectively, that includes carbon and hydrogen atoms. The term can also refer to a molecule or functional group that normally includes both carbon and hydrogen atoms but wherein all the hydrogen atoms are substituted with other functional groups.

As used herein, the term "hydrocarbyl" refers to a functional group derived from a straight chain, branched, or cyclic hydrocarbon, and can be alkyl, alkenyl, alkynyl, aryl, cycloalkyl, acyl, or any combination thereof. Hydrocarbyl groups can be shown as (Cₐ-C_{b})hydrocarbyl, wherein a and b are integers and mean having any of a to b number of carbon atoms. For example, (C₁-C₄)hydrocarbyl means the hydrocarbyl group can be methyl (C₁), ethyl (C₂), propyl (C₃), or butyl (C₄), and (C₀-C_{b})hydrocarbyl means in certain embodiments there is no hydrocarbyl group.

The term "number-average molecular weight" (Mₙ) as used herein refers to the ordinary arithmetic mean of the molecular weight of individual molecules in a sample. It is defined as the total weight of all molecules in a sample divided by the total number of molecules in the sample. Experimentally, Mₙ is determined by analyzing a sample divided into molecular weight fractions of species i having nᵢ molecules of molecular weight Mᵢ through the formula Mₙ = ΣMᵢnᵢ / Σnᵢ. The Mₙ can be measured by a variety of well-known methods including gel permeation chromatography, spectroscopic end group analysis, and osmometry. If unspecified, molecular weights of polymers given herein are number-average molecular weights.

The term "radiation" as used herein refers to energetic particles travelling through a medium or space. Examples of radiation are visible light, infrared light, microwaves, radio waves, very low frequency waves, extremely low frequency waves, thermal radiation (heat), and black-body radiation.

The term "UV light" as used herein refers to ultraviolet light, which is electromagnetic radiation with a wavelength of about 10 nm to about 400 nm.

The term "cure" as used herein refers to exposing to radiation in any form, heating, or allowing to undergo a physical or chemical reaction that results in hardening or an increase in viscosity.

The term "pore" as used herein refers to a depression, slit, or hole of any size or shape in a solid object. A pore can run all the way through an object or partially through the object. A pore can intersect other pores.

The term "solvent" as used herein refers to a liquid that can dissolve a solid, liquid, or gas. Non-limiting examples of solvents are silicones, organic compounds, water, alcohols, ionic liquids, and supercritical fluids.

The term "room temperature" as used herein refers to a temperature of about 15°C to 28°C.

The term "coating" as used herein refers to a continuous or discontinuous layer of material on the coated surface, wherein the layer of material can penetrate the surface and can fill areas such as pores, wherein the layer of material can have any three-dimensional shape, including a flat or curved plane. In one example, a coating can be formed on one or more surfaces, any of which may be porous or nonporous, by immersion in a bath of coating material.

The term "surface" as used herein refers to a boundary or side of an object, wherein the boundary or side can have any perimeter shape and can have any three-dimensional shape, including flat, curved, or angular, wherein the boundary or side can be continuous or discontinuous. While the term surface generally refers to the outermost boundary of an object with no implied depth, when the term 'pores' is used in reference to a surface, it refers to both the surface opening and the depth to which the pores extend beneath the surface into the substrate.

The term "mil" as used herein refers to a thousandth of an inch, such that 1 mil = 0.001 inch.

As used herein, the term "polymer" refers to a molecule having at least one repeating unit and can include copolymers.

The polymers described herein can terminate in any suitable way. In some embodiments, the polymers can terminate with an end group that is independently chosen from a suitable polymerization initiator, -H, -OH, a substituted or unsubstituted (C₁-C₂₀)hydrocarbyl (e.g., (C₁-C₁₀)alkyl or (C₆-C₂₀)aryl) interrupted with 0, 1, 2, or 3 groups independently selected from -O-, substituted or unsubstituted -NH-, and -S-, a poly(substituted or unsubstituted (C₁-C₂₀)hydrocarbyloxy), and a poly(substituted or unsubstituted (C₁-C₂₀)hydrocarbylamino).

Illustrative types of polyethylene include, for example, ultra high molecular weight polyethylene (UHMWPE), ultra low molecular weight polyethylene (ULMWPE), high molecular weight polyethylene (HMWPE), high density polyethylene (HDPE), high density cross-linked polyethylene (HDXLPE), cross-linked polyethylene (PEX or XLPE), medium density polyethylene (MDPE), low density polyethylene (LDPE), linear low density polyethylene (LLDPE) and very low density polyethylene (VLDPE).

As used herein, the term "injection molding" refers to a process for producing a molded part or form by injecting a composition including one or more polymers that are thermoplastic, thermosetting, or a combination thereof, into a mold cavity, where the composition cools and hardens to the configuration of the cavity. Injection molding can include the use of heating via sources such as steam or induction to heat the mold prior to injection, and the use of cooling sources such as water to cool the mold after injection, allowing faster mold cycling and higher quality molded parts or forms. An insert for an injection mold can form any suitable surface within the mold, such as a surface that contacts at least part of the injection molded material, such as a portion of an outer wall of the mold, or such as at least part of an inner portion of the mold around which the injection molded material is molded. An insert for an injection mold can be an insert that is designed to be separated from the injection molded material at the conclusion of the injection molding process. An insert for an injection mold can be an insert that is designed to be part of the injection molded product (e.g., a heterogeneous injection molded product that includes the insert bonded to the injection molded material), wherein the injection molded product includes a junction between the injection molded material and the insert.

The term "standard temperature and pressure" as used herein refers to 20 °C and 101 kPa.

The terms and expressions that have been employed are used as terms of description and not of limitation, and there is no intention in the use of such terms and expressions of excluding any equivalents of the features shown and described or portions thereof, but it is recognized that various modifications are possible within the scope of the embodiments of the present invention. Thus, it should be understood that although the present invention has been specifically disclosed by specific embodiments and optional features, modification and variation of the concepts herein disclosed, which are within the scope of embodiments of the present invention as disclosed in the appended claims, may be resorted to by those of ordinary skill in the art.

## Claims

1. A method of forming surface structures on a solid plastic part, the method comprising:
treating a surface of the solid plastic with laser interference patterning to define the surface structures on the solid plastic, the surface structures having at least one dimension approximately parallel to the surface of 100 nm to 1 mm, the solid plastic part patterned to define a diffusive surface for diffusing light that passes through the solid plastic part.

2. A method of forming surface structures on a plastic, the method comprising:
treating the surface of a metal form with laser interference patterning, to provide the surface structures on the treated metal surface
contacting a flowable resin composition to the surface of the metal form comprising surface structures, the surface structures having at least one dimension approximately parallel to the metal surface of 100 nm to 1 mm, to form a solid plastic part comprising corresponding surface structures on a surface thereof, defining a diffusive surface for diffusing light that passes through the solid plastic part.

3. The method of Claim 2, wherein the laser interference patterning directly forms the surface structures on the treated metal surface.

4. The method of any of Claims 2 - 3, wherein the surface of the metal treated with laser interference patterning is free of a photomask and a photoresist.

5. The method of any of Claims 2 - 4, wherein the method is free of chemical etching of the treated metal surface.

6. The method of any of Claims 2 - 5, wherein contacting the flowable resin composition and the surface of the metal comprises injecting molding the flowable resin composition.

7. The method of any of Claims 2 - 6, wherein the metal form comprising the surface structures is an insert in an injection molding mold, is part of the interior of an injection molding mold, or a combination thereof.

8. The method of any of the preceding claims, wherein the surface structures have a height or depth of 1 nm to 10 micrometers.

9. The method of any of the preceding claims, wherein the surface structures have a height or depth of 100 nm to 1 mm.

10. The method of any of the preceding claims, wherein the at least one dimension is 100 nm to 100 micrometers.

11. The method of any of the preceding claims, wherein the surface structures are at least one of dots, lines, and pores.

12. The method of any of the preceding claims, wherein the method is free of photolithography and photochemical machining.

13. The method of any of the preceding claims, wherein the solid plastic part comprises at least one of a polycarbonate polymer (PC), an acrylonitrile butadiene styrene polymer (ABS), polybutylene terephthalate polymer (PBT), a polymethylmethacrylate polymer (PMMA), and a styrene acrylonitrile polymer (SAN).

14. The method of any of the preceding claims, further comprising forming a lighting product comprising the solid plastic part comprising surface structures.

15. A lighting product comprising the solid plastic part with the surface structures of any of the preceding claims.

## Patentansprüche

1. Verfahren des Bildens von Oberflächenstrukturen auf einem festen Kunststoffteil, wobei das Verfahren Folgendes umfasst:
Behandeln einer Oberfläche des festen Kunststoffs mit Laserinterferenzstrukturierung, um die Oberflächenstrukturen auf dem festen Kunststoff zu definieren, wobei die Oberflächenstrukturen mindestens eine Abmessung ungefähr parallel zur Oberfläche von 100 nm bis 1 mm haben, wobei das feste Kunststoffteil strukturiert ist, um eine Diffusionsoberfläche zum Diffundieren von Licht, das durch das feste Kunststoffteil hindurchtritt, zu definieren.

2. Verfahren des Bildens von Oberflächenstrukturen auf einem Kunststoff, wobei das Verfahren Folgendes umfasst:
Behandeln der Oberfläche einer Metallform mit Laserinterferenzstrukturierung, um die Oberflächenstrukturen auf der behandelten Metalloberfläche bereitzustellen,
Inkontaktbringen einer fließfähigen Harzzusammensetzung mit der Oberfläche der Metallform, die Oberflächenstrukturen umfasst, wobei die Oberflächenstrukturen mindestens eine Abmessung ungefähr parallel zur Metalloberfläche von 100 nm bis 1 mm haben, um ein festes Kunststoffteil, umfassend entsprechende Oberflächenstrukturen auf einer Oberfläche davon, zu bilden, das eine Diffusionsoberfläche zum Diffundieren von Licht, das durch das feste Kunststoffteil hindurchtritt, definiert.

3. Verfahren nach Anspruch 2, wobei die Laserinterferenzstrukturierung die Oberflächenstrukturen direkt auf der behandelten Metalloberfläche bildet.

4. Verfahren nach einem der Ansprüche 2 bis 3, wobei die Oberfläche des Metalls, die mit Laserinterferenzstrukturierung behandelt ist, frei von einer Fotomaske und einem Fotowiderstand ist.

5. Verfahren nach einem der Ansprüche 2 bis 4, wobei das Verfahren frei von chemischem Ätzen der behandelten Metalloberfläche ist.

6. Verfahren nach einem der Ansprüche 2 bis 5, wobei Inkontaktbringen der fließfähigen Harzzusammensetzung und der Oberfläche des Metalls Spritzgießen der fließfähigen Harzzusammensetzung umfasst.

7. Verfahren nach einem der Ansprüche 2 bis 6, wobei die Metallform, die die Oberflächenstrukturen umfasst, ein Einsatz in einer Spritzgussform ist, Teil des Inneren einer Spritzgussform ist oder eine Kombination davon.

8. Verfahren nach einem der vorhergehenden Ansprüche, wobei die Oberflächenstrukturen eine Höhe oder Tiefe von 1 nm bis 10 Mikrometer haben.

9. Verfahren nach einem der vorhergehenden Ansprüche, wobei die Oberflächenstrukturen eine Höhe oder Tiefe von 100 nm bis 1 mm haben.

10. Verfahren nach einem der vorhergehenden Ansprüche, wobei die mindestens eine Abmessung 100 nm bis 100 Mikrometer ist.

11. Verfahren nach einem der vorhergehenden Ansprüche, wobei die Oberflächenstrukturen mindestens eines von Punkten, Linien und Poren sind.

12. Verfahren nach einem der vorhergehenden Ansprüche, wobei das Verfahren frei von Fotolithografie und fotochemischer Bearbeitung ist.

13. Verfahren nach einem der vorhergehenden Ansprüche, wobei das feste Kunststoffteil mindestens eines von einem Polycarbonat-Polymer (PC), einem Acrylnitril-Butadien-Styrol-Polymer (ABS), Polybutylenterephthalat-Polymer (PBT), einem Polymethylmethacrylat-Polymer (PMMA) und einem Styrol-Acrylnitril-Polymer (SAN) umfasst.

14. Verfahren nach einem der vorhergehenden Ansprüche, ferner umfassend Bilden eines Beleuchtungsprodukts, das das feste Kunststoffteil umfasst, das Oberflächenstrukturen umfasst.

15. Beleuchtungsprodukt, umfassend das feste Kunststoffteil mit den Oberflächenstrukturen nach einem der vorhergehenden Ansprüche.

## Revendications

1. Procédé de formation de structures de surface sur une pièce en plastique solide, le procédé comprenant :
le traitement d'une surface du plastique solide avec une formation de motifs par interférence laser pour définir les structures de surface sur le plastique solide, les structures de surface ayant au moins une dimension approximativement parallèle à la surface de 100 nm à 1 mm, la partie en plastique solide modelée pour définir une surface de diffusion pour diffuser la lumière qui traverse la partie en plastique solide.

2. Procédé de formation de structures de surface sur un plastique, le procédé comprenant :
le traitement de la surface d'une forme métallique avec une formation de motifs par interférence laser pour fournir les structures de surface sur la surface métallique traitée ;
la mise en contact d'une composition de résine fluide avec la surface de la forme métallique comprenant des structures de surface, les structures de surface ayant au moins une dimension approximativement parallèle à la surface métallique de 100 nm à 1 mm, pour former une pièce en plastique solide comprenant des structures de surface correspondantes sur une surface de celle-ci, définissant une surface de diffusion pour diffuser la lumière qui traverse la partie en plastique solide.

3. Procédé selon la revendication 2, dans lequel la formation de motifs par interférence laser forme directement les structures de surface sur la surface métallique traitée.

4. Procédé selon l'une quelconque des revendications 2 à 3, dans lequel la surface du métal traité avec une formation de motifs par interférence laser est exempte d'un photomasque et d'un photorésist.

5. Procédé selon l'une quelconque des revendications 2 à 4, dans lequel le procédé est exempt de gravure chimique de la surface métallique traitée.

6. Procédé selon l'une quelconque des revendications 2 à 5, dans lequel la mise en contact de la composition de résine fluide et de la surface du métal comprend le moulage par injection de la composition de résine fluide.

7. Procédé selon l'une quelconque des revendications 2 à 6, dans lequel la forme métallique comprenant les structures de surface est un insert dans un moule de moulage par injection, fait partie de l'intérieur d'un moule de moulage par injection, ou une combinaison de ceux-ci.

8. Procédé selon l'une quelconque des revendications précédentes, dans lequel les structures de surface ont une hauteur ou une profondeur de 1 nm à 10 micromètres.

9. Procédé selon l'une quelconque des revendications précédentes, dans lequel les structures de surface ont une hauteur ou une profondeur de 100 nm à 1 mm.

10. Procédé selon l'une quelconque des revendications précédentes, dans lequel l'au moins une dimension est de 100 nm à 100 micromètres.

11. Procédé selon l'une quelconque des revendications précédentes, dans lequel les structures de surface sont au moins l'un parmi des points, des lignes et des pores.

12. Procédé selon l'une quelconque des revendications précédentes, dans lequel le procédé est exempt de photolithographie et d'usinage photochimique.

13. Procédé selon l'une quelconque des revendications précédentes, dans lequel la pièce en plastique solide comprend au moins l'un parmi un polymère polycarbonate (PC), un polymère acrylonitrile butadiène styrène (ABS), un polymère polytéréphtalate de butylène (PBT), un polymère polyméthacrylate de méthyle (PMMA), et un polymère de styrène acrylonitrile (SAN).

14. Procédé selon l'une quelconque des revendications précédentes, comprenant en outre la formation d'un produit d'éclairage comprenant la partie en plastique solide comprenant des structures de surface.

15. Produit d'éclairage comprenant la partie en plastique solide avec les structures de surface selon l'une quelconque des revendications précédentes.
